# EUROPEAN PATENT APPLICATION

(11) **EP 3 576 181 A1**
(43) Date of publication of application: **04.12.2019**
(21) Application number: 19176800.1
(22) Date of filing: 27.05.2019
(51) Int. Cl.: H01M 2/10, H01M 2/12, H01M 10/42, H01M 10/647, H01M 10/655

(54) **SUBMARINE BATTERY BANK**

(30) Priority: 28.05.2018 AU 2018901874; 17.01.2019 AU 2019900143
(71) Applicant: PMB Defence Engineering Pty Ltd, North Haven, South Australia, 5018 (AU)
(72) Inventor: CHAPLIN, Peter Michael, South Australia, 5018 (AU); GILMORE, Matthew, Osborne, South Australia, 5017 (AU)
(74) Representative: Delorme, Nicolas

(57) **Abstract**

The invention relates to a battery bank (100) for a submarine. The battery bank (100) includes an array of battery cells (114) in electrical connection, each battery cell (114) having a cell top (124) which includes an upper portion (126) and a lower portion (128). A services passage (170) is recessed below the upper portion (126) for accommodating at least one ancillary service conduit (166). The battery bank (100) further includes a plurality of removable crawl boards (182) for overlying and concealing the services passage (170).

## Description

### Priority Cross Reference

The present application claims priority to Australian provisional application 2018901874 filed 28 May 2018 and to Australian provisional application 2019900143 filed 17 January 2019, the entire disclosure of these applications is herein incorporated by reference.

### Technical Field

The present invention relates to the field of batteries and, more particularly, a battery bank comprising a number of battery cells in electrical connection. The invention is particularly applicable for use in a submarine or other submersible vehicle and it will be convenient to hereinafter disclose the invention in relation to this exemplary application. However, it is to be appreciated that the invention is not limited to this use and could be applied in a variety of alternative applications which utilise a battery bank for an electrical power supply.

### Background of Invention

The following discussion of the background to the invention is intended to facilitate an understanding of the invention. However, it should be appreciated that the discussion is not an acknowledgement or admission that any of the material referred to was published, known or part of the common general knowledge as at the priority date of the application.

Conventional diesel-electric submarines include an air-breathing diesel engine for primary propulsion and an electric propulsion system for operation when submerged beyond air snorkel range and/or where silent running is required. The electric propulsion system typically comprises several electric motors and at least one large battery within an enclosed volume in the boat hull known as the battery compartment. Whilst colloquially referred to with the singular term 'battery', a submarine battery consists of a battery bank comprising an array of several hundred discrete lead-acid battery cells in electrical connection.

Submarine battery cells typically comprise a rectangular volume having an upper surface from which a number of elements protrude upwardly including battery terminals, a battery probe and a ventilation port. Operation of the cell array requires a number of ancillary service systems including a cooling system and an agitation system. The cooling system may include a series of coolant inlet and outlet conduits delivering coolant to each cell and maintaining the cells at an optimum temperature. The agitation system includes air conduits delivering an air supply to each cell for agitating and homogenising the cell electrolyte. The service system conduits are typically laid across the flat cell tops between the cell terminals and other upwardly protruding elements.

Submarine battery cells require ongoing maintenance and servicing during normal operation, for example, electrolyte testing, cell repair, water top-up and cleaning of electrical connections and battery terminals. In order for maintenance personnel to manually access each cell without unintentionally contacting high-voltage battery components and/or high-temperature cooling conduits, a series of electrically insulating planks known as 'crawl boards' are suspended above or laid across the battery cell tops. By crawling on their knees or stomach across the crawl boards, maintenance personnel can access each of the cells within the battery compartment.

It is desirable for a given battery compartment volume to include the largest possible battery for the largest electro-chemical capacity and therefore greatest electric propulsion system performance. However, the compartment and battery design must also allow sufficient volume between the battery cell tops and the battery compartment ceiling to permit manual access for essential maintenance and repair.

It is therefore desirable to provide a new or improved submarine battery design which improves or optimises volume utilisation within the battery compartment.

Before turning to a summary of the invention it is useful to provide an explanation of some of the terms that will be used to define the spatial relationship of various parts thereof. It will be appreciated that a submarine battery array is intended for installation on a generally horizontal installation surface in a battery compartment. Terms herein will be understood in the context of a battery cell in its normal upstanding orientation on the installation surface. Terms such as 'upper', 'lower', 'upwardly', 'downwardly' and the like will be understood as relative to the installation surface. Terms such as 'vertical' or 'upright' will be appreciated as referring to an orientation that is generally perpendicular to the installation surface. Terms such as 'port', 'starboard', 'forward' and 'aft' will be appreciated as respectively referring to the left, right, front and rear sides of the battery compartment and battery bank.

### Summary of Invention

According to the present invention there is provided a battery bank for a submarine, the battery bank including: an array of battery cells in electrical connection, each battery cell having a cell top which includes an upper portion and a lower portion; a services passage recessed below the upper portion for accommodating at least one ancillary service conduit; and a plurality of removable crawl boards overlying and concealing the services passage.

The present invention advantageously provides a services passage recessed into the tops of the battery cells allowing for optimised volume utilisation. Conventional battery cells have flat tops with ancillary service conduits laid along the flat tops and crawl boards laid above the ancillary services. This conventional arrangement results in unutilised battery compartment volume beneath the crawl boards in between the ancillary service conduits and battery terminals. In contrast, the provision of a dedicated services passage in the array which is recessed below the top portion of the battery cell allows for increased battery volume without reducing the manual access volume above the crawl boards for maintenance and repair.

The ancillary services which may be accommodated within the services passage may, for example, include cooling inlet conduits, cooling outlet conduits, agitation conduits, battery terminals and electrical connectors such as bus bars. As well as optimising volume utilisation, the provision of a dedicated services passage is advantageously neater and allows for pipes and tubing to be routed in a less haphazard manner as compared to conventional layouts. The services passage also facilitates the routing of various tubes, electrical cables and other ancillary services and reduces or eliminates the need for cable ties and tape which are used extensively in previous systems.

In turn, cleaning of the cells, wires and tubes is also facilitated by the neater routing, reduced reliance on ties and tape as well as the conduits being partially enclosed within the services passages thereby reducing the amount of dirt, grime and sediment build up on these hard to clean components. The use of ties and tape in conduit routing is time consuming to arrange neatly. As such, a reduction in the use of these components may also enable installation and/or maintenance to be performed more quickly and efficiently.

Previous submarine battery banks have included crawl boards sufficient to cover approximately 10 - 20% of total battery array area. During operation, maintenance personnel rearrange the boards to create a desired access path to a particular section of the array. The present invention advantageously involves crawl boards being located only over the recessed services passage and not necessarily over the upper portion of the battery. Consequentially, the crawl boards of the present invention can be smaller and thinner than previous arrangements. For example, previous crawl boards may be typically 100cm long, 60cm wide and 1cm thick. In contrast, a particular embodiment of the present invention includes crawl boards 50cm long, 30cm wide and 0.3cm thick. Crawl boards suitable for use with the present invention may therefore be lighter and easier to handle as compared to previous systems. In turn, total weight and material cost of the battery array may also be reduced. Furthermore, the use of smaller and lighter crawl boards may (depending on operational requirements) enable a larger number of crawl boards to be used and therefore reduce the amount of time expended by maintenance personnel rearranging crawl board position.

It will be appreciated that a battery bank can be provided in a variety of sizes as fit for the particular application and therefore the number of services passages may vary. Depending on the configuration of a cell array, a particular form of the invention may include a single services passage. Alternatively, a battery bank according to the present invention may include a plurality of services passages. In a particular form of the invention, the battery bank includes an array comprising numerous rows and columns of battery cells with a series of services passages extending across the array.

The services passage may be provided in a variety of positions in the array which are recessed below the upper portion of the cell tops, for example between adjacent cells or through an opening in a portion of the cells. However, according to a preferred form of the invention, the services passage is formed in the cell tops. This form of the invention advantageously integrates the services passage with the cell top, thereby simplifying the array design and locating the ancillary services in an accessible position at the top of the battery cells for maintenance.

In a particular form of the invention, the lower portions of the cell tops are arranged adjacently in the array to collectively form the services passage. The adjacent arrangement of successive lower portions may therefore define a passage along the top of the array bounded by the upper portions of successive cells. The services passage may include a base formed by a surface of lower portions and side walls formed by a generally upright portion of the cell tops. The passage may be formed as a recess, channel, or other elongate depression suitable for accommodating service conduits, for example coolant tubes. The passage may be formed in various widths and have various cross sections depending on the particular dimensions of the cell top. Similarly, the position of the lower portion in relation to the upper portion may vary. In this manner the cell top of each battery cell can be configured for maximum internal volume whilst the lower portion of each cell provides a services passage or volume in which essential services can be accommodated without increasing the overall height of the array.

In a particular form of the invention, the cell tops of the array each include a single lower portion and therefore the cell tops may each form part of a single services passage. In an alternative form of the invention, each cell top includes a first lower portion and a second lower portion spaced apart from the first lower portion by the upper portion. That is, the upper portion is disposed in between a pair of first and second lower portions. The first and second lower portions of successive cell tops may be arranged adjacently to collectively form respective first and second services passages on either side of the cell top upper portions.

The lower portion may consist of recess, cut out, channel, depression, groove, lowered tier, shoulder or any other suitable lowered section of the cell top. A particular form of the invention includes a step formation extending between the lower portions and the upper portion. The step formation may be formed in a variety of configurations but, according to a particular embodiment of the invention, the step formation includes a plurality of fold portions and, more particularly, may include four fold portions. The inclusion of fold portions advantageously increases mechanical strength and stiffness of the cell top, enabling a reduction in thickness. By way of example, it is typically necessary to produce the flat tops on a conventional battery approximately 20mm thick for sufficient mechanical strength. In contrast, the fold portions provided in the cell top of the present invention may allow for a cell top thickness of less than 20mm. A particular form of the invention may include a cell top having a thickness of less than 10mm thick and, in more particular form of the invention a cell top having a thickness of approximately 5mm.

According to a particular form of the invention, the battery cells include a plurality of upright side walls extending between the cell top and a cell base. As discussed in the foregoing, the cell top of the present invention is preferably formed in a non-planar configuration having an upper portion and a lower portion. However, it will be appreciated that the rest of the battery cell below the cell top may be formed in a variety in a variety of shapes, profiles and sizes. The side walls of the present invention may be elongate, for example defining a cylindrical, rectangular or triangular volume. Alternatively, the side walls may each be square and define a cube. Any other suitable sidewall configurations could also be used with the present invention, for example side wall configurations which define a pentagon, octagon and so on. The battery cells may each have the same volumetric shape and size or, alternatively, a single array may include a variety of cell sizes or shapes as desired to suit a particular battery compartment.

According to a particular form of the invention, each of the battery cells in the array has the same shape and size. In one embodiment of the invention, each cell includes four upright side walls and the cell top and base each have a rectangular periphery. Each cell may define an upstanding rectangular prism i.e. a rectangular prism having an upright longitudinal axis.

In a particular form of the invention, each cell top comprises a lid with a downwardly extending peripheral flange. The peripheral flange may facilitate connection between the cell top and upper edge of the side walls during assembly of the battery cell, for example via a snap fit, interference fit or any other suitable connection configuration. In a particular form of the invention the battery lid is glued in place. The peripheral flange may also advantageously improve the mechanical strength and/or stiffness of the lid and allow for further reductions in lid thickness and thereby further reductions in weight and material cost. However, in alternative forms of the invention, the cell top may be integrally formed with the battery cell side walls and an access opening provided in another portion of the cell, for example in a side wall or in the base.

In a particular form of the invention, the upper portions of the cell tops have top surfaces and the crawl boards have upper surfaces which are co-planar with the top surfaces of the cell tops. In this form of the invention, the crawl boards and cell top surfaces are therefore aligned or flush with one another. This form of the invention is advantageous insofar as the array volume is optimised by providing the maximum volume in the services passage without raising the crawl boards beyond the height of top surfaces of the battery cells. However, it will be appreciated that in alternative configurations of the invention, the crawl boards could be recessed below the top surface of the cell upper portions or, alternatively, be positioned higher than the top surfaces for example in a position which overlaps the top surfaces.

A particular battery cell suitable for use with the present invention includes a number of utility elements for facilitating battery operation and maintenance. One form of the invention includes a cell probe having a probe head and stem, a ventilation port for expelling gasses or vapours, and an agitation port for connection to an air supply as part of a cell agitation system. A particular embodiment of the invention includes a recess in the upper portion of the cell in which the probe head, ventilation port and agitation port are positioned. The provision of a recessed section in the upper portion advantageously enables the utility elements to be recessed into the top surface of the upper portion so as not to increase overall cell height. Positioning the utility elements in a recessed section of the upper portion (as opposed to location in the services passage) also facilitates maintenance access to the utility elements without removing crawl boards.

The recessed section may be sized or shaped to facilitate use of manual tools or fittings used in the servicing of the battery cells. For example, the recessed section may be formed as a channel which is sufficiently wide to receive a socket, spanner, wrench or similar tool. The above noted step formation may also be configured to facilitate use of manual tools. For example, as well as improving mechanical strength/stiffness of the cell top, the stepped formation may provide a relief allowing rotation of a socket or other tool when servicing the battery cell.

According to an embodiment of the invention, the array may define a generally flat or co-planar surface. For example, the top of the array may be formed sufficiently flat to enable personnel to slide across the array in relative comfort. It will also be appreciated that a variety of battery cells are suitable for use with the present invention and that not all cells will necessarily include the above-noted three utility elements.

The crawl boards may each include a concaved portion for complementary receipt of a portion of one of the utility elements. For example, a concaved portion at a corner of the crawl boards may be configured to accommodate a portion of the probe head or agitation port. In this manner, the crawl boards can be configured to fit around, complement or conform to the shape of one or more of the utility elements so as to advantageously reduce or eliminate gaps at an edge of the crawl boards. This reduction of spaces or gaps may help to partially seal the services passage from the rest of the battery compartment and reduce the amount of battery cell emissions in the maintenance volume above the battery array.

In a particular form of the invention, the battery cells each include a pair of electrical connections and, more particularly, a pair of battery terminals. The battery terminals may be located at the lower portion of the cell top and therefore be concealed by the crawl boards. As discussed in the foregoing, a particular form of the invention includes a pair of lower portions on each cell top and this form of the invention can include a first pair of battery terminals at the first lower portion and a second pair of battery terminals at the second lower portion. The exact position of the battery terminals on the lower portions may vary. However, a particular embodiment of the invention includes a generally rectangular cell top in which each of the four terminals are adjacent to one of the four corners of the cell top. In certain embodiments of the invention, the battery terminals are arranged to bear the load of the crawl boards and positioning the terminals at the corners of the cell top may optimise load distribution.

It is generally desirable for the crawl boards to be secured in position to prevent undesirable movement during submarine operation. This may be achieved in a variety of ways. However, in a particular form of the invention, the battery bank includes a crawl board locking mechanism for removably connecting the crawl boards to the battery cells. By way of example, the crawl boards may include an opening through which a locking member is inserted and engaged with a bus bar secured to the battery terminals. In a particular form of the invention, the battery terminals and/or a bus bar connecting a pair of terminals may be arranged to bear the load of the crawl boards and any downward load applied to the crawl boards, such as the weight of maintenance personnel. In an alternative form of the invention, the cell tops may be configured such that the crawl boards are borne by the another portion of the cell top, such as the upper portion or the stepped formation between the upper portion and lower portion, or the cell top may include specific mounting portions upon which the crawl boards can be mounted.

As noted in the foregoing, the number of battery cell rows and columns in the cell array can vary depending on the desired application for the battery bank. A particular embodiment of the invention includes a generally rectangular array, when viewed from plan perspective, and includes a plurality of services passages that extend across a widthwise direction of the array. It will be appreciated that the exact configuration of ancillary services can also vary but, by way of example, a cooling system inlet manifold may extend along a first longitudinal edge of the array and a cooling system outlet manifold may extend along the opposing second longitudinal edge of the array. A plurality of cooling inlet and outlet conduits can therefore extend between the inlet and outlet manifolds in a widthwise direction across the array, through the plurality of services passages and beneath the crawl boards. An agitation system manifold may also extend along a longitudinal edge of the array and a plurality of agitation conduits extending along some or all of the services passages beneath the crawl boards.

Each of the agitation ports in the battery cells may be connected to the agitation conduit via an agitation feed tube in the services passage. Each of the cells may also include coolant inlet outlet ports which are connected to the respective coolant inlet and outlet conduits in the services passages via respective coolant feed and coolant exit tubes. Advantageously, each of the agitation conduits, coolant inlet conduits, coolant outlet conduits, coolant feed and exit tubes and agitation feed tubes may be recessed into the services passage and between the upper portions of each battery cell. The upper portions of the battery cell which bound each services passage therefore provide additional internal battery volume not present in the flat-topped cells of a conventional submarine battery array.

As discussed in the foregoing, the battery cells of the array can have a rectangular cell top which includes four battery terminals, one terminal adjacent to each of the four corners of the cell top.

According to a particular embodiment of the invention, each cell top includes a pair of battery terminals located adjacent to the services passage and the cell top is shaped to occupy a volume between the pair of battery terminals. This form of the invention advantageously further increases cell occupation of otherwise empty volume beneath the crawl boards thereby enlarging overall cell volume and the overall electric capacity of the cell.

The cell tops may include a plurality of terminal cut-outs, each cut-out accommodating a battery terminal. Locating the battery terminals in a specific cut-out formed into the cell top enables better occupation of the volume surrounding the terminals thereby further maximising overall cell capacity. The cut-outs may me formed in a variety of configurations for example, round, square, pentagonal, or a combination of various geometries. The cut-outs are preferably integrally formed in the cell-top, for example are formed during moulding of the cell-top.

In a particular form of the invention, the crawl boards are shaped to correspond and to and engage with the particular geometry of the cut-outs. For example, the crawl boards can include a plurality of corner portions shaped to correspond with the terminal cut-outs. The corner portions of the crawl boards may therefore mate, nest, engage or otherwise fit together with the cut-outs so as to overlie the lower portion of the cell tops and form a continuous surface on the top of the battery array.

The terminal cut-outs and the crawl board corner portions may be contoured. For example, the cut-outs and crawl board corner portions may be cured. In a particular example, the cut-outs are concave and the crawl board corner portions are convex so as to fit within the concave cut-outs.

In some forms of the invention, the terminal cut-outs are sized such that sufficient clearance is provided on all sides of the terminal to permit maintenance access to the terminal. In an alternative form of the invention, the terminal cut-outs are formed to more closely surround the terminal but are provided with a specific recess or additional cut-out to facilitate maintenance access. For example, the terminal cut-outs can include a tool cut-out providing clearance for facilitating terminal servicing.

As discussed in the foregoing, the utility elements can be located within a channel formed in the cell top. However, according to an alternative form of the invention, each of the utility elements is located in a respective utility recess in the cell top. This form of the invention advantageously increases occupation of the volume around the utility elements thereby once again increasing overall cell volume and electric capacity.

A removable cap or plug may be provided to fit the recess and cover the utility elements when in use. In this manner, the upper portion of the cell top may have a flat top surface. When the crawl boards are in position overlying the services passage and fitted with the terminal cut-outs the battery array may therefore include a continuous top surface which is flat or substantially flat.

In forms of the invention where the utility elements are located within separate recesses in the cell top, a conduit passage may be provided in the cell top for receiving a conduit which connects one or more of the utility elements to the services passage. For example, the cell top can include a conduit passage for accommodating a services conduit extending between one of the utility elements and the services passage. In a particular form of the invention, the agitation supply tube is received within the conduit passage which extends between the services passage and the agitation port. In a particular form of the invention, the conduit passage comprises a groove or channel formed in the top surface of the cell top.

According to a particular embodiment of the invention, the crawl boards may include a peripheral sealing member. For example, a rubber seal may be provided at the edge of the crawl board to seal against the cell tops and prevent dust, debris or liquid spills falling between the crawl boards and the cells.

The crawl boards may be flat or, alternatively, may be formed with a bunded area to capture any fluid spills. The bunded area may comprise a shallow recession in the crawl board which is slightly lower than the peripheral edges of the crawl board. The recession may be relatively small, for example between 1 - 5mm. Accordingly, when the crawl boards are installed into the battery array, the top surface of the battery array will still be substantially flat and continuous, notwithstanding the shallow recession in the crawl boards. The top surface of the cell tops and the upper surfaces of the crawl boards may therefore be either co-planar or approximately co-planar for example, if the top surface of the crawl boards is recessed by 1 - 5mm.

For convenience of explanation and description, the above summary of invention has been described with reference to a submarine battery bank comprising an array of battery cells. However, it will be appreciated that the present invention also relates to the features of a single battery cell.

In this regard, an aspect of the present invention provides a battery cell for a submarine battery bank, the battery cell including a plurality of upright side walls extending between a cell top and a cell base, the cell top including an upper portion defining a top surface of the cell, the cell top also including a lower portion for accommodating one or more service conduits in a position below the top surface of the cell. The lower portion of the cell may include a lower surface and the cell top may include at least one step formation connecting the lower portion to the top surface.

As discussed in the foregoing, the step portion may include a plurality of folded portions and, more particularly, may comprise a plurality of generally perpendicular folds. The cell top of the battery may consist of a removable lid which can include a downwardly extending peripheral flange.

The battery cell may include a pair of lower portions disposed on opposite ends of the upper portion, each lower portion including a pair of battery terminals. The cell top may be shaped to occupy a volume between each pair of battery terminals. Each of the battery terminals may be located in a respective cut-out formed in the cell top.

A particular embodiment of the battery cell includes a channel and also includes a probe head of a cell probe, an agitation port and a ventilation port, each located in the channel and thereby recessed into the upper portion of the cell top.

In a particular form of the invention, the cell probe, agitation portion and ventilation port are each accommodated in a respective utility recess and the cell top further includes a conduit passage for, in use, accommodating a services conduit extending between one of the utility recesses and the lower portion of the cell top.

It will be appreciated from the above explanation that the present invention maximises internal cell volume and thereby optimises battery compartment volume. The present invention utilises the top of the battery cells as part of the crawling surface for maintenance personnel providing a more personnel-friendly battery array. It will also be appreciated that the present invention may help to reduce hazardous battery emissions by concealing or partially sealing service conduits and/or utility elements from the crawl-space above the battery bank.

Furthermore, the crawl boards of the present invention do not cover the entire top of the battery cells as in some existing designs wherein hydrogen rich air can become trapped and enriched creating an explosion risk. Whereas the battery cell vents in some previous systems are covered by the crawl boards, the crawl boards of the present invention need not cover the battery cell vent and facilitates release or ventilation of hazardous gasses from the battery compartment. The present invention therefore helps simplify the design of the battery compartment air ventilation system as well as minimise pockets of explosive gas mixtures.

The present invention is particularly applicable for use as an electrical power source for a diesel-electric submarine or other submersible vehicles. However, the invention may also be utilised in a variety of alternative applications. By way of example, the present invention may be utilised in non-submersible ships as well as land-based vehicles such as locomotives or electric automobiles. The present invention may also be utilised in static installations such as backup electrical power supplies, solar power storage or as part of other forms of energy generation and storage installations. It will be appreciated that the present invention is particularly advantageous where volume optimisation is important, for example where a battery array is required in a small area or where maintenance must be performed in a confined volume.

### Brief Description of Drawings

In order that the invention may be more fully understood, some embodiments will now be described with reference to the figures in which:
Figure 1 illustrates a submarine battery bank including a battery cell array according to a first embodiment of the present invention;
Figure 2 illustrates a battery cell from the battery bank illustrated in Figure 1;
Figure 3 illustrates a closer perspective of the top of the battery cell illustrated in Figure 2;
Figure 4 illustrates a lid of the battery cell illustrated in Figures 2 and 3;
Figure 5 illustrates an underside of the cell lid illustrated in Figure 4;
Figure 6 is closer perspective of a cooling inlet and outlet conduit in the battery bank of Figure 1;
Figure 7 is a closer perspective of an agitation conduit in the battery bank of Figure 1;
Figure 8 is a closer perspective of an battery terminal connection in the battery bank of Figure 1;
Figure 9 is a closer perspective of the crawl boards in the battery array of Figure 1; and
Figure 10 is a closer perspective of the battery bank illustrated in Figure 1.
Figure 11 is an alternative perspective of the battery bank with crawl boards removed to illustrate the services passageway and service conduits therein;
Figure 12 is a perspective view of a second embodiment battery cell array according to the present invention;
Figure 13 is a closer perspective view of the array in Figure 12 and with three removable bus-bar covers shown fitted onto the array;
Figure 14 is a partial top view of a pair of battery cells according to the second embodiment illustrated in Figure 12;
Figure 15 is a perspective view of a crawl board for use in the second embodiment of the invention;
Figure 16 is a side view of a pair of battery cells according to the second embodiment of the invention;
Figure 17 is a partial cross-sectional view of a battery cell top according to the second embodiment of the invention;

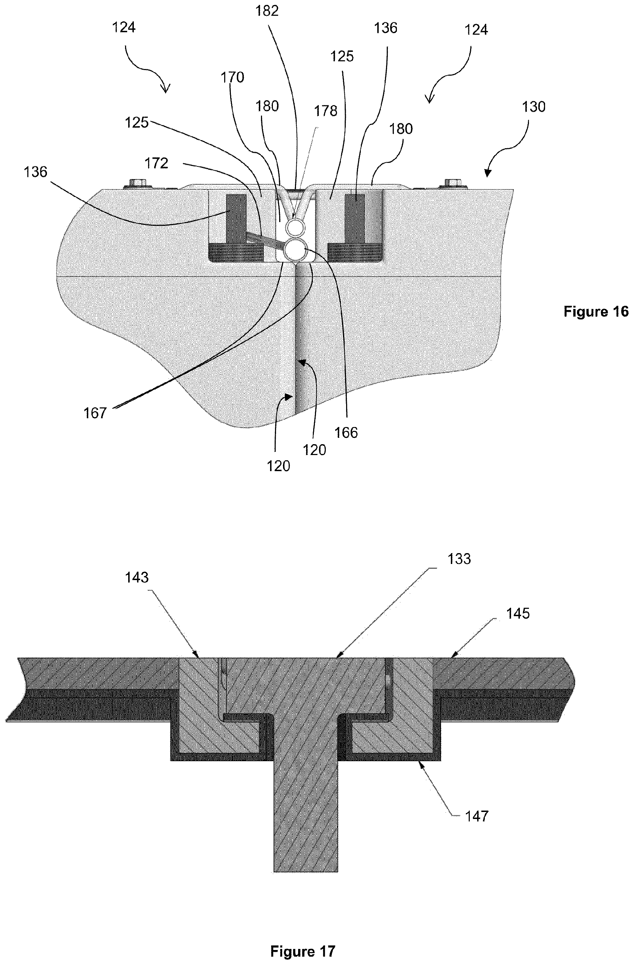

Figure 17 is a top view of a corner of a battery cell according to a third embodiment of the invention.

### Detailed Description

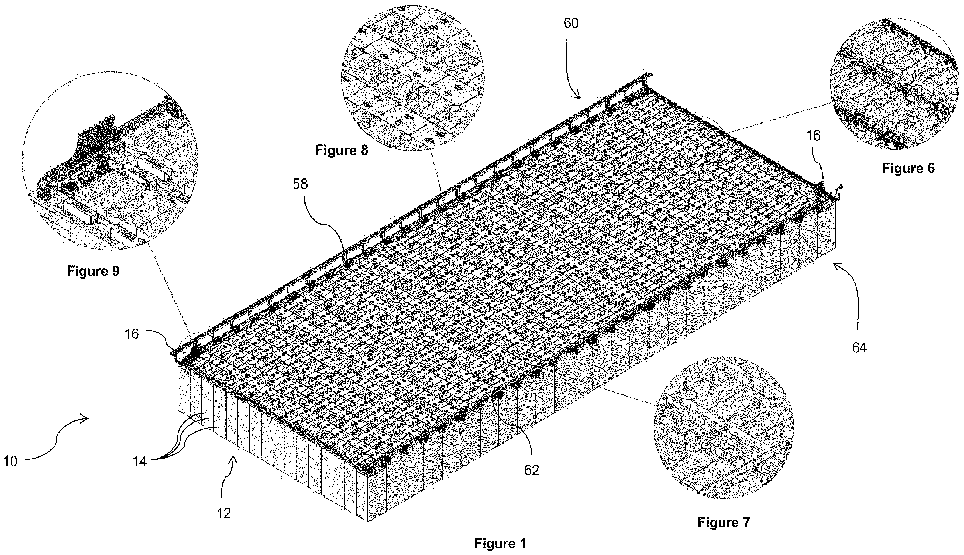

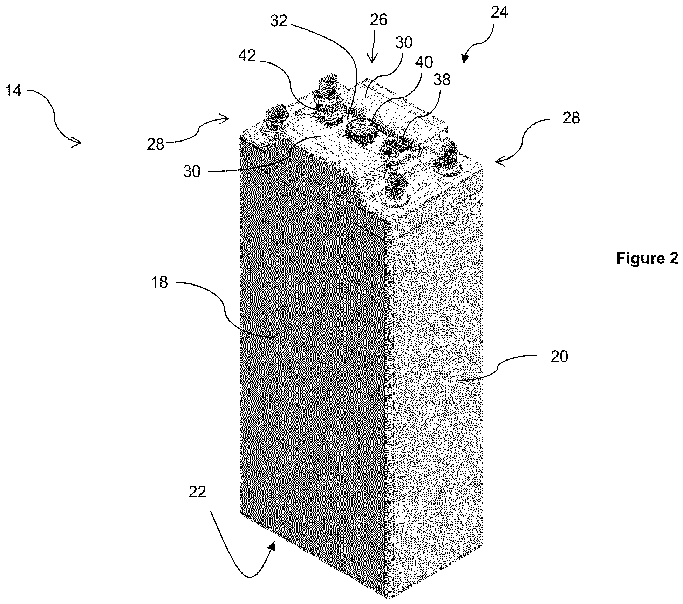

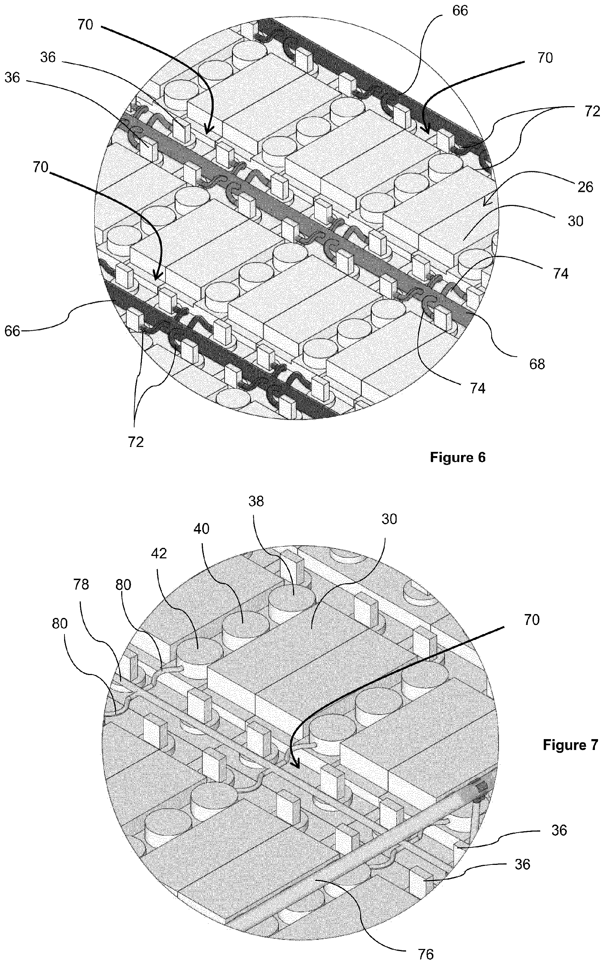

Figure 1 is an isometric view of a battery bank 10 comprising a 16x25 array 12 of identical lead-acid battery cells 14 in electrical connection. Array 12 comprises sixteen rows and twenty-five columns and therefore includes four-hundred battery cells 14. Array terminals 16 are located at opposing corners of battery bank 10 for connection to a submarine electrical power system. Expanded views of Figure 1 are illustrated in Figures 6 - 10 which illustrate additional features of battery bank and will be discussed in greater detail below. Before doing so, an explanation of the features of battery cells 14 will be provided with reference to Figures 2 - 5.

Turning to Figure 2, battery cell 14 includes four upright side walls defining a rectangular prism and comprising a pair of first opposing walls 18 and a pair of second opposing walls 20. Side walls 18, 20 extend between a cell base 22 and a cell top 24. Cell top 24 is formed having an upper portion 26 and a pair of lower portions 28 on either side of upper portion 26. Upper portion 26 includes pair of top surfaces 30 which define the topmost part of cell 14. Upper portion 26 further includes a recessed section comprising a channel 32 extending between the pair of top surfaces 30. Channel 32 includes three utility elements consisting of a probe head 38, ventilation port 40 and an agitation port 42. Each utility element is located within channel 32 and recessed below top surfaces 30. Ventilation port 40 includes acid mist separator and a flame arresting arrangement designed to arrest any ignition of the hydrogen/air mixture vented from cells 14. Probe head 38 is connected to a monitoring probe (not shown) for monitoring parameters of the battery cell such as levels, voltage and temperature. Agitation port 42 provides an inlet for receiving an air supply to each cell for agitating and homogenising the cell electrolyte.

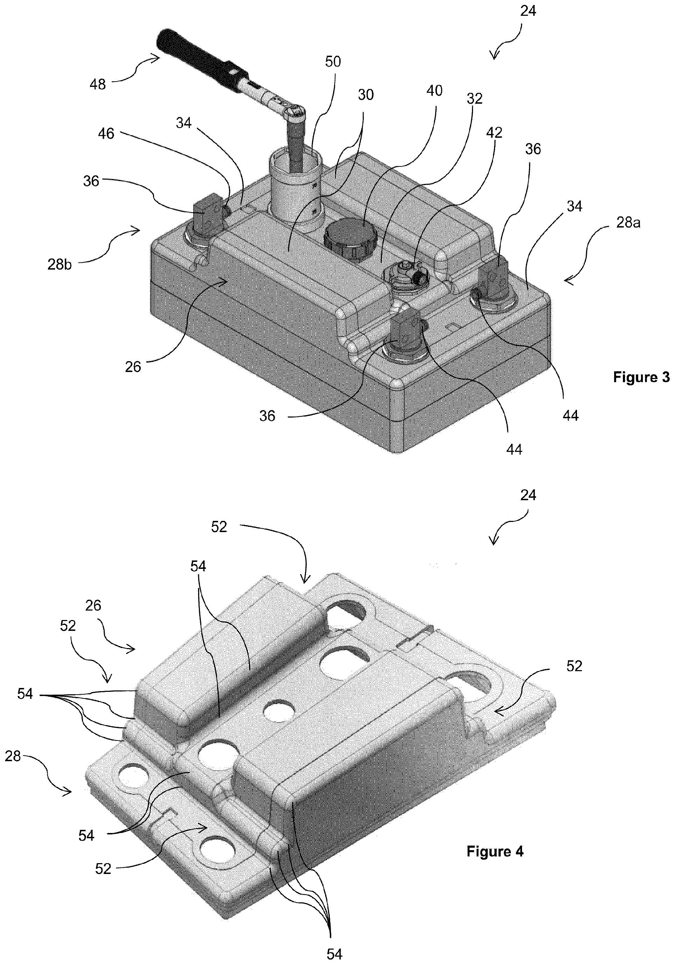

Turning to Figure 3, the features of cell top 24 will be described in further detail. Lower portions 28 each include a lower surface 34 which is lower than both channel 32 and top surfaces 30. In Figure 3, lower portions 28 are labelled as first lower portion 28a and second lower portion 28b. Each lower portion 28 includes a pair of electrical connections comprising terminals 36 which extend upwardly from each lower surface 34. Terminals 36 on first lower portion 28a (i.e. adjacent to agitation portion 42) each include coolant circuit outlet ports 44. The pair of terminals 36 on the second lower portion 28b (i.e. adjacent to probe head 38) each includes a coolant circuit inlet port 46. Lower portions 28 and lower surfaces 34 are recessed below upper portion 26 such that terminals 36 do not extend above top surfaces 30. As illustrated in Figures 2 and 3, terminals 36 are each located adjacent to one of the four corners of cell top 24.

Figure 3 illustrates a tool comprising a handle 48 connected to a socket 50 fitted to probe head 38 which is therefore concealed from view. Socket 50 is sized to be received in channel 32, permitting engagement with probe head 38. The relief provided by channel 32 is configured with a low-profile for maximum internal battery cell volume whilst still recessing the top of utility elements 42, 44, 46 below or in line with top surfaces 30.

Figure 4 provides a perspective view of cell top 24 with terminals and utility elements not shown. As shown, cell top 24 includes a number of openings for connecting the utility elements and terminals with the internal portion of the battery cell. Cell top 24 is formed with four step formations 52 extending between the lower portion 28 and upper portion 26. Step formations 52 each include four rounded 90° fold portions 54 which add strength and stiffness to cell top 24 as well as providing relief facilitating tool access to the battery terminals. Additional fold portions 54 are also located between lower portions 28 and channel 32 and between channel 32 and top surfaces 30.

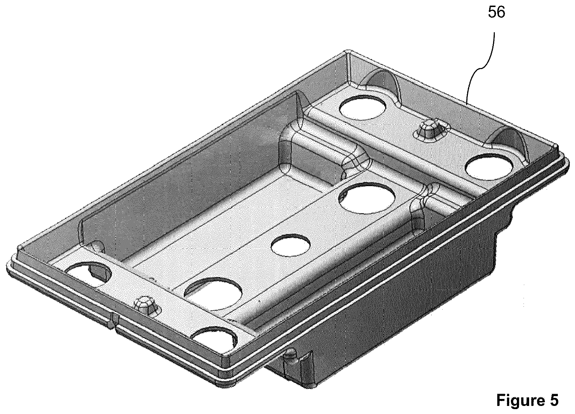

Figure 5 is an underside view of cell top 24 and illustrates a downwardly extending peripheral flange 56 providing a connection means between cell top 24 and the sidewalls of the battery cell. Flange 56 provides a further increase in the stiffness and strength of cell top 24. In contrast to conventional flat battery cell tops, which are typically required to be formed 20mm thick for sufficient stiffness, the arrangement of step formations and other folded portions in cell top 24 enable cell top a significant reduction in thickness. In particular, the exemplary cell top 24 in figures 4 and 5 is produced of polymer material approximately 5mm thick.

With the features of individual cell 14 and cell top 24 described above with reference to Figures 2 to 5, the broader features of array 16 and battery bank 10 will now be described with reference to Figures 1 and 6 to 10.

Returning to Figure 1, battery bank 10 includes a cooling system to maintain cells 24 at a desired operating temperature. The cooling system includes a coolant inlet manifold 58 extending along a first longitudinal edge 60 of the array 12 and a coolant exit manifold 62 extending along a second longitudinal edge 64 of array 12.

Turning to Figure 6, there is provided a closer perspective of the top of array 12. Figure 6 illustrates array 12 with crawl boards removed for illustrative purposes so as to reveal the series of services passages 70 extending in a widthwise direction across array 12. Services passages 70 include a base formed by the lower surfaces 34 of cell tops 24 and at least one side formed by the connection formations 52 of cell tops 24. Services passages 70 extending between adjacent battery cell columns (e.g. the lower-left services passage 70 in Figure 6) include a pair of sides whereas the services passages 70 extending along the outer edges of array 12 (e.g. the top-right services passage 70 in Figure 6) include only a single side but nonetheless define a services passage 70 capable of accommodating a services conduit.

A series of coolant inlet conduits 66 and coolant outlet conduits 68 extend across the widthwise direction between inlet and outlet manifolds 58, 62 and through services passages 70 and between battery terminals 36. As shown, the cooling system conduits 66, 68 are recessed below the upper portion 26 of cells 14. Coolant feed tubes 72 deliver chilled coolant from coolant inlet conduits 66 to the coolant circuit inlet ports 46 which are best illustrated in figure 3. Similarly, coolant exit tubes 74 carry heated coolant from coolant circuit outlet ports 44 to coolant exit conduits 68.

During operation, coolant is pumped from cooling inlet manifold 58 through coolant inlet conduits 66, through coolant feed tubes 72 and into coolant circuit inlet ports 46 and through each cell 14 transferring heat to the coolant. Heated coolant exits cells 14 via coolant circuit exit ports 44 and through coolant exit tubes 74 into coolant exit conduit 68 and finally into coolant exit manifold 62 where it is recirculated through a cooling system (not shown) for re-cooling and reintroduced into battery cells 14.

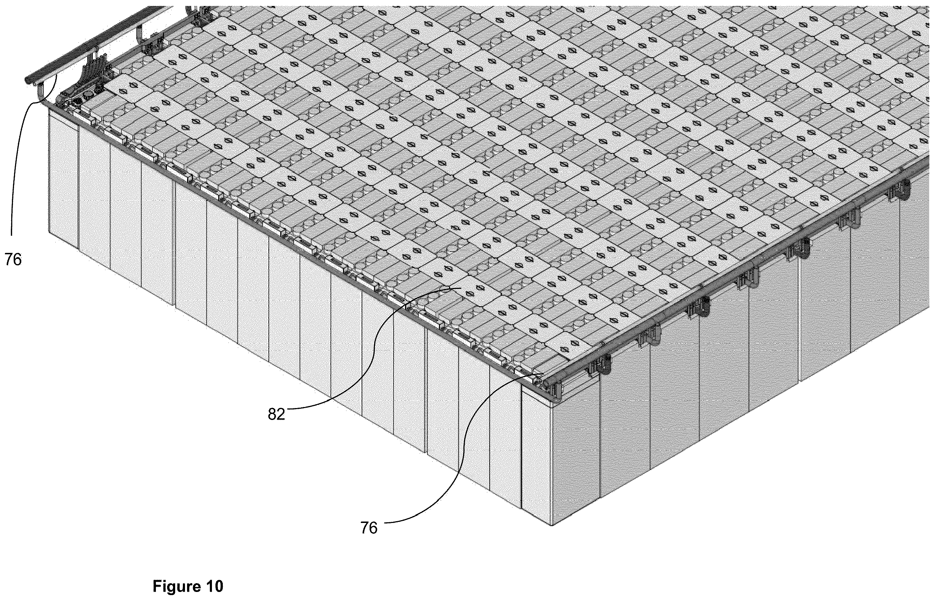

Turning briefly to Figure 10, a pair of agitation inlet manifolds 76 are shown extending parallel and adjacent to each of the coolant inlet and outlet manifolds 58, 62 along each of the first and second longitudinal edges 60, 64 of array 12. Turning to Figure 7, a portion of one of the agitation inlet manifolds 76 is shown at the bottom of the figure. A series of agitation inlet conduits 78 extend through services passages 70 between battery terminals 36 delivering a high pressure air supply via agitation supply tubes 80 to the agitation ports 42 on each of cells 14. The air supply is fed to the base of cells 42 and released into the electrolyte as a bubble stream which agitates and homogenises the electrolyte for improved battery performance.

Cells 14 are arranged such that first side walls 18 abut the first side wall 18 of an adjacent cell 14 and second side wall 20 abuts with a second side wall 18 of an adjacent cell 14. In this arrangement, the lower portions 28 of successive cells 14 are positioned adjacently to collectively define the services passages 70 in cell tops 24. It will be appreciated that each cell top 24 therefore forms part of a first services passage 70 and also a second services passage 70 on either side of the upper portion 26.

Cells 14 in array 12 are orientated such that agitation ports 42 are disposed on opposite sides of a common services passage 70. Accordingly, agitation conduits 78 are required only in every second services passage 70. Coolant circuit inlet ports 46 and outlet ports 44 are similarly positioned on opposite sides of a common services passage 70. A coolant inlet conduit 66 and an exit conduit 68 are therefore positioned in every second services passage 70. Inlet conduits 66 and exit conduits 68 therefore alternate across the plurality of services passages 70. In a particular embodiment of the invention, the agitation conduits 78 and coolant exit conduits 68 share a common services passage 70.

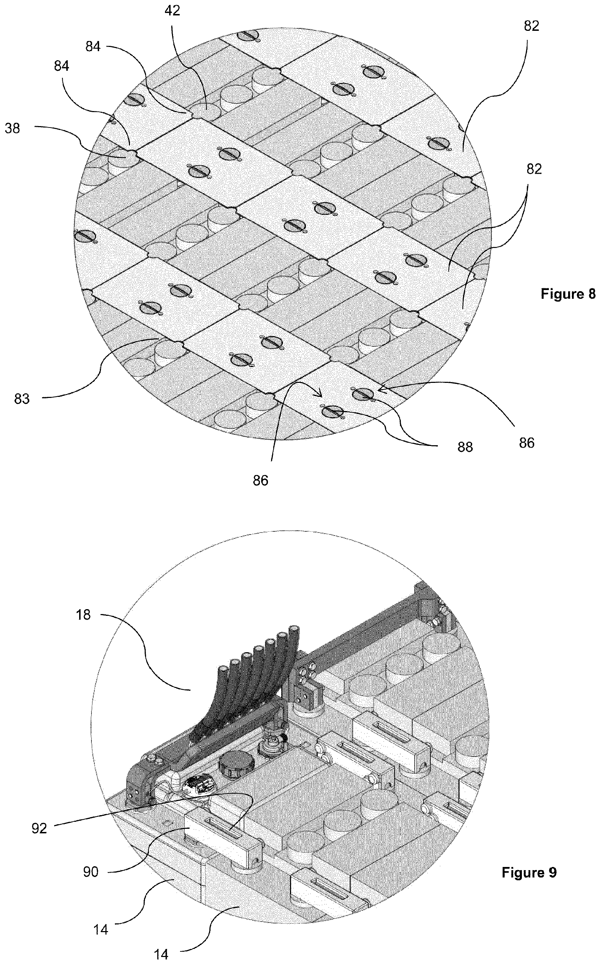

Figure 8 provides a closer perspective of the top of array 12 with crawl boards 82 fitted to the array 12 so as to overlie and conceal services passages 70. Crawl boards 82 are generally rectangular and include a concave portion 84 at their corners which is configured for complementary accommodating a portion of either the probe head 38 or agitation port 42. Concave portions 84 thereby reduce gaps at the interface between probes 38, agitation ports 42 and crawl boards 82. Consequently, the potential for small tools and dirt to fall below the crawl boards 82 is reduced, as well as reducing the amount of undesirable battery cell emissions within the battery compartment volume above crawl boards 82.

Previous crawl boards have included one or more openings to operate as a handle facilitating removal during maintenance. The crawl boards 82 of the present invention are advantageously configured to at least partially seal services passages 70 and for this reason do not include a handle opening. Instead, removal is facilitated via a finger hold 83 at the interface between cell top channels 32 and the crawl boards 82. A rubber seal (not shown) is adhered to the underside of crawl boards 82 adjacent to finger hold 83 to further seal services passage 70 and may also operate as a handle to facilitate crawl board removal.

Still referring to Figure 8, crawl boards 82 are secured to the battery array 12 via a pair of locking mechanisms 86. Each locking mechanism 86 includes a locking member 88 extending downwardly through an opening in crawl boards 82. Turning to Figure 9, a bus bar (not shown) connects the battery terminals 36 of adjacent battery cells 14. Protective and non-conductive bus bar covers 90 are placed on each of the bus bars to protect against short-circuiting. Bus bar covers 90 include an opening 92 configured for receiving and engaging locking members 88 to secure crawl boards in a position overlying services passages 70. Each locking member 88 has a quarter turn lug having a catch portion (not shown) which extends through bus bar opening 92 and engages the underside of the bus bar cover 90. Locking members 88 are inserted through openings 92 and turned 90° to engage with the bus bar cover 92 and secure the crawl boards 82 to the bus bar cover 90 thereunder. Removal of crawl boards 82 involves turning locking members 88 by 90° in the opposite direction to disengage the catch portion and thereby unsecure locking members 88 and facilitate removal of crawl boards 82.

Figure 10 illustrates a closer perspective of battery bank 10 with crawl boards 82 fitted in position. It will be appreciated from this perspective that the present invention provides a battery array having a generally flat upper surface in which the crawl boards 82 and cell top surfaces 30 are co-planar or approximately co-planar. As illustrated, the electrical components, utility elements and ancillary service conduits all recessed below the top surfaces 30 and are concealed by crawl boards 82 to prevent accidental contact. Concealment of services passages 70 with crawl boards 82 also helps to prevent dirt, grime and acid build up on parts which are difficult to clean.

It will be noted that the rows of crawl boards 82 constitute only a portion (approximately 10%) of the total top area of array 12. Accordingly, total weight is reduced or, for a given mass, a larger proportion of array weight is allocated to power-producing cells and less to non-productive crawl boards. It will be appreciated from the illustrated embodiment that the recessed services passages enable the cell tops to be formed generally flat such that the upper portion of the cell tops become crawlable. In contrast to previous systems where no portion of the battery cells were crawlable, the upper portion of the battery cells in the present invention serve dual functions as, firstly, an upper lid of the cell and, secondly, a crawlable surface which facilitates maintenance access.

It is noted that the three utility elements (probe head 38, ventilation port 40 and agitation port 42) are, for convenience of illustration, not rendered in full detail when shown in Figures 1 and 6-10. In these particular drawings, the probe head 38, ventilation port 40 and agitation port 42 are represented by rounded protrusions, best shown in Figure 7. It will be appreciated that these rounded protrusions are merely representative of the probe head 38, ventilation 40 and agitation port 42 which are shown in more accurate detail in Figures 2, 3 and 11. It is also noted that, for convenience of illustration, the agitation system is omitted from Figure 6 and the cooling system is omitted from Figure 7.

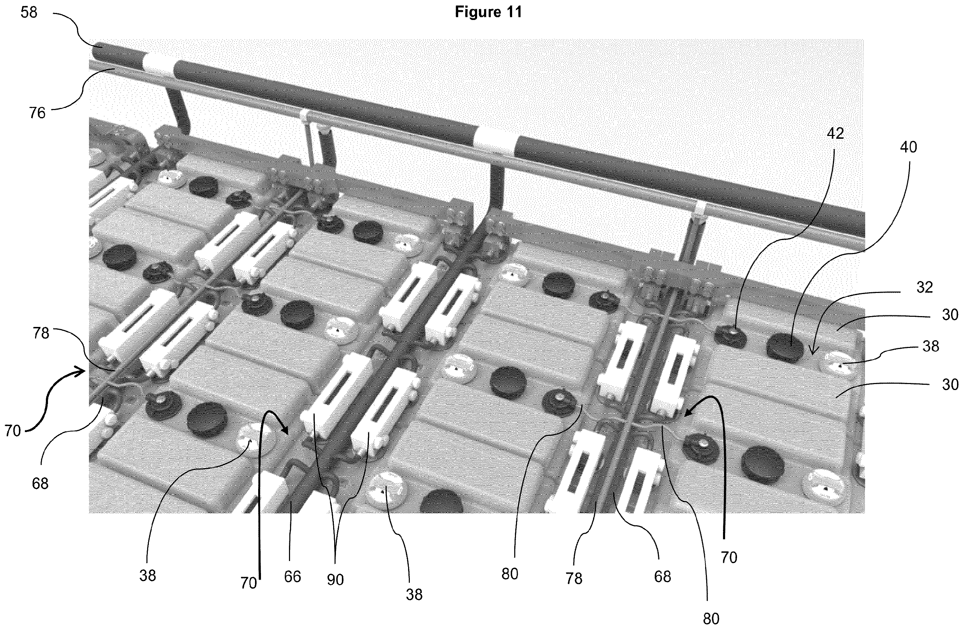

Figure 11 provides another perspective view in which the components of the battery bank 10 are rendered in greater detail and in which both the agitation system and cooling system conduits are illustrated. In figure 11, probe head 38, ventilation port 40 and agitation port 42 are also rendered in more accurate detail (as compared to Figures 1 and 6-10) and are shown in their recessed position beneath the cell top surfaces 30 and within the cell top channels 32

The crawl boards are omitted from Figure 11 to reveal the services passages 70 and the service conduits therein. The coolant inlet conduits 66, agitation conduits 78 and coolant exit conduits 68 extend between opposing pairs of bus bar covers 90 which are spaced along services passages 70. The agitation ports 42 and the probe heads 38 are positioned adjacent one of the services passages 70 and are each generally round in profile. As discussed in the foregoing, the crawl boards may include a concaved corner to accommodate and receive a portion of the rounded profile of the agitation ports 42 and probe head 38 so as to reduce the size of gaps at the edge of the crawl boards.

As noted in the foregoing, agitation conduits 78 are positioned in every second services passage 70. The services passages 70 are recessed below the cell top surfaces 30. The services passages 70 through which the coolant inlet conduits 66 extend are flanked on either side by probe heads 38. The services passages 70 through which the coolant exit conduits 68 extend are flanked on either side by agitation ports 42. The coolant inlet conduits 66 are located in a services passage 70 without an agitation conduit 78 whereas the agitation conduits 78 and the coolant exit conduits 68 share a common services passage 70. As illustrated in Figure 11, the agitation conduits 78 overlie the coolant exit conduits 68 and connect to the adjacent agitation ports 42 via the agitation supply tubes 80. Figure 11 also provides a closer perspective of the previously described agitation inlet manifold 76 and coolant inlet manifold 58 which supply air and coolant respectively to the agitation conduits 78 and coolant inlet conduits 66.

The illustrated embodiment exemplifies how services passages 70 can be formed by arranging lower portions 28 of battery cells in an adjacent and successive manner. In the illustrated embodiment, the services passages are linear. However it will be appreciated that other battery cell arrangements or cell top configurations could be used to create non-linear services passages if such a configuration was desirable in a particular battery bank application.

Cell base 22, cell top 24 and cell side walls 18, 20 may be formed from any suitable electrically insulative material and preferably is polymeric. Suitable materials for construction of a battery cell will be known to a person skilled in the art, for example, polypropylene, polyethylene, Acrylonitrile Butadiene Styrene. Cell top 24 may be produced by any suitable polymer moulded process for example injection moulding or blow moulding.

It will be appreciated that the provision of services passages 70 enables recession and concealment of the ancillary services conduits 66, 68, 78 as well as associated feed and exit tubes 72, 74 and 80 and terminals 36. In contrast to previous systems, where each of these components were positioned on top of the flat-topped battery cells and crawl boards placed even higher again, the present invention improves volume utilisation by maximising battery cell volume in between the services conduits and utility elements reducing wasted volume within the battery compartment.

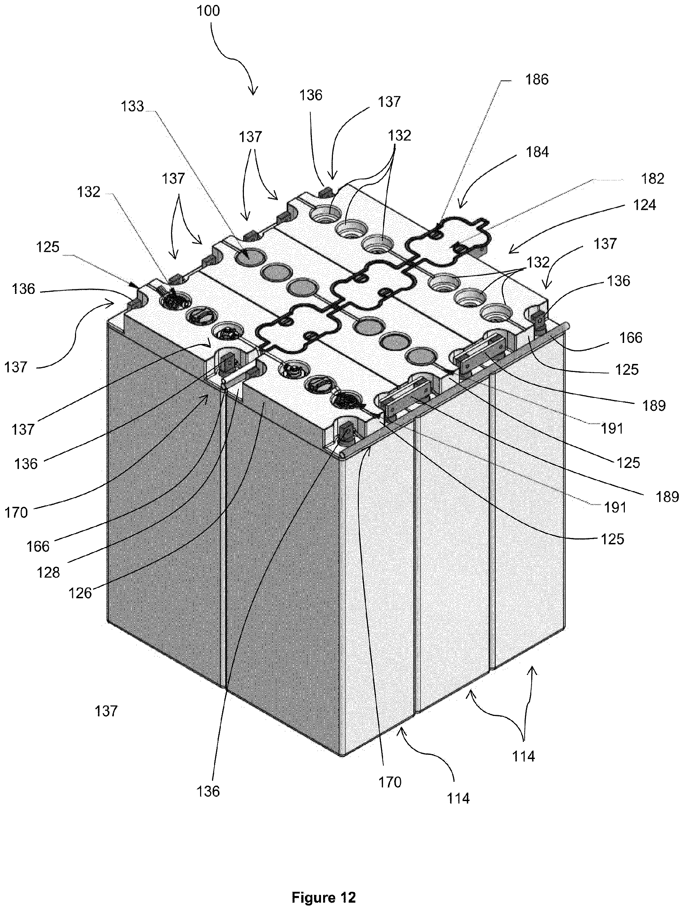

Turning to Figures 12 to 17, there is illustrated a second embodiment of the present invention in which the cell top 24 of the first embodiment has been reconfigured for increased occupation of the volume surrounding and between the battery terminals 36. The second embodiment also provides increased cell occupation of the volume surrounding the utility elements.

The increased cell occupation provided by the second embodiment of the present invention therefore allows for a further increase in battery bank electric capacity and without increasing the height, length or width dimensions of the cell array.

Figure 12 illustrates a portion of a battery bank 100 according to a second embodiment of the invention. Battery bank 100 would, in use, consist of a larger number of battery cells 114 but for illustrative purposes has been limited to six battery cells 114.

Battery cells 114 have cell tops 124 that are modified from the cell tops 24 according to the first embodiment of the invention which are illustrated, for example, in Figures 2 and 3. Cell tops 124 include an upper portion 126 and a lower portion 128.

Each of the four corners of the cell tops 124 includes a terminal cut-out 137 which accommodate a battery terminal extending from lower portion 128. The cut-outs 124 are contoured with a rounded concave profile which partially encircles terminal 136.

The upper portion 126 of cell tops 124 includes a jutting portion 125 which extends between the cut-outs 124 and into the volume between the pair of terminals 136 which are adjacent to the services passage 170. The jutting portion 125 therefore occupies a volume between the pair of terminals 136 and between cut-outs 137. Jutting portions 125 thus utilise and occupy the space between the terminals 136 to increase the total volume of the battery cells 114.

Cell tops 124 include three utility recesses 132 which, for illustrative purposes, are shown empty in the rear pair of battery cells 114 in Figure 12. In the middle pair of cells 114 in Figure 12, the utility recesses 132 are shown covered with a removable cap 133. In the front pair of cells 114 shown in Figure 12, the utility elements are illustrated within their respective utility recesses 132.

Bus-bars 189 are illustrated in Figure 12 which bridge across adjacent cell tops 124 and electrically connect a pair of adjacent terminals 136. The bus bars 189 occupy a portion of cut-outs 137 and extend generally parallel to the services passages 170. A pair of service tubes 166 are illustrated extending through the central service passage 170 illustrated in Figure 12 and a single service tube 166 is shown extending along the service passage 170 shown at the right-front side of Figure 12.

Still referring to Figure 12, the crawl boards 182 according to the second embodiment of the invention include rounded corner portions 184 shaped to correspond with the cut-outs 137. The corner portions 184 define a convex profile which fit within the concave profile of cut-outs 137. As shown in Figure 12, the crawl boards 182 are positioned to overlie the services passages 170 and to provide a substantially flat top surface on battery array 100. The crawl boards 182 are secured to the array via a locking mechanism 186.

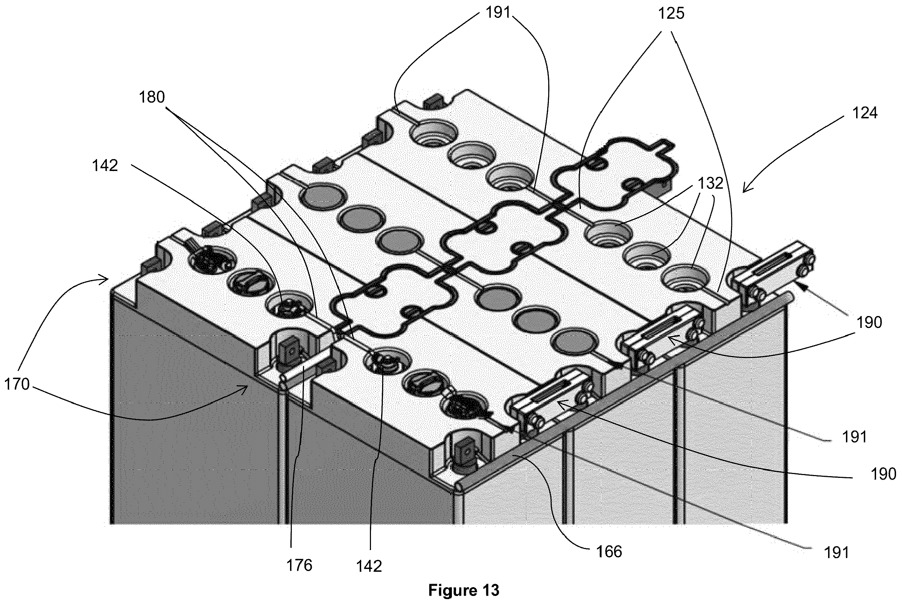

Turning to Figure 13, there is provided a closer perspective of the array 100. Figure 13 also illustrates three removable bus bar 190 covers fitted to the bus bars 189. Cell tops 124 are formed with a pair of conduit passages 191 which comprise grooves extending between the outside utility recesses 132 and the service passages 170. The conduit passages 191 extend along the upper surface of jutting portions 125. For illustrative purposes, all of the grooves 191 are shown empty except for the inside pair at the front of Figure 13 which are occupied by the agitation supply tubes 180 which supply agitation fluid (for example air) from agitation inlet conduit 176 to agitation ports 142.

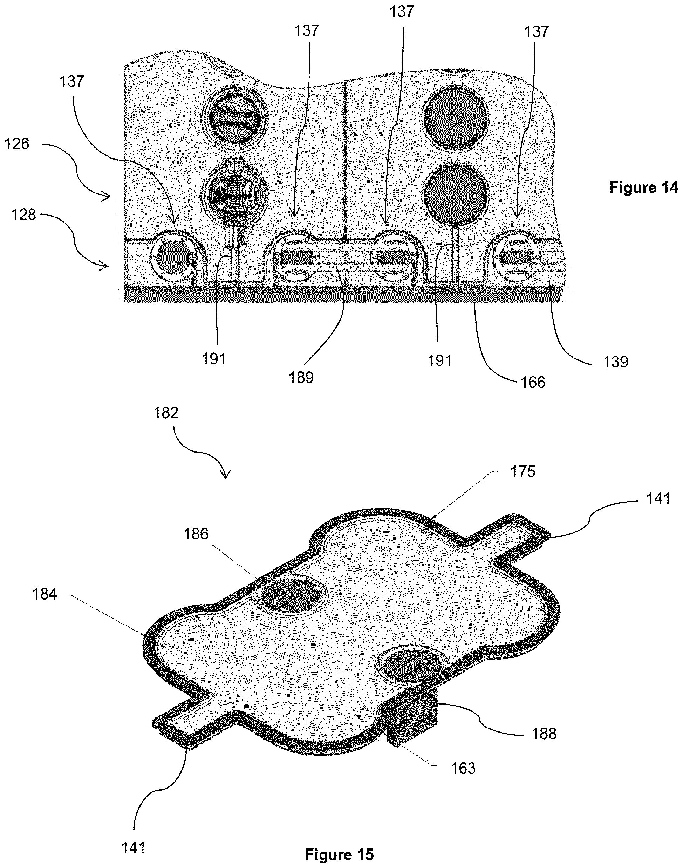

Figure 14 provides a top view in which the cut-outs 137, conduit passages 191 and bus bars 189 are shown from another perspective. The cut-outs 137 are formed to snugly encircle a portion of terminals 136. In order to reduce the volume clearance required around the terminal 136, bus-bars 189 may be provided with an internal thread configuration thereby eliminating the need for a nut. In this form of the invention, a fastener may extend through an opening in the bus bar and through an opening in the terminal and engage with an internal thread on the inside bus bar 189.

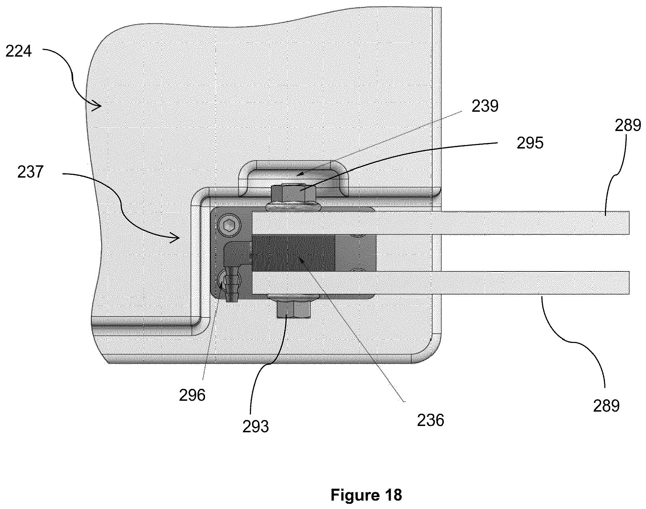

The bus-bar mounting illustrated in figure 14 is to be contrasted with the alternative embodiment illustrated in Figure 18 in which bus bars 289 are mounted to terminal 236 via a bolt 293 and a nut 295. In contrast to the rounded cut-out 124 illustrated in Figure 14, the cell top 224 in Figure 18 includes a cut-out 237 which generally rectangular. The rectangular cut-out 224 includes a tool cut-out 239 which provides clearance for a tool to access nut 295 during maintenance. Coolant port 196 comprises a right angled fitting so as to fit within cut-out 237.

Turning now to Figure 15, the crawl board 182 according to the second embodiment of the invention is illustrated. The crawl board 182 includes rounded corner portions 184 for engaging and covering cut-outs 137. End projections 141 extend from either end of the crawl board 182 for, in use, overlying the portion of the services passage 170 between the cell top jutting portions 125 which extend between the terminals 136.

A rubber seal 175 is provide at the periphery of the crawl board 182 for sealing against the cell tops to prevent dust, debris or liquid spills falling between the crawl boards and the cells. A locking mechanism 186 includes a locking member 188 which is configured for insertion between the bus-bars 189 to lock the crawl board in position. The peripheral edge of the crawl board 182 is raised slightly higher than the planar portion 163 of the crawl board 182. The planar portion 163 therefore defines a bunded area which is slightly recessed below the periphery so as to help capture any fluid spills.

Figure 16 provides a side perspective of cell tops 124 according to the second embodiment of the invention. The services passage 170 contains an agitation inlet conduit 178 which supplies agitation fluid (e.g. air) to the agitation supply tubes 180 seated within the conduit passages 191. In the particular example shown in Figure 16, the services passage 170 also contains a coolant inlet conduit 166 supplying cooling to the cells 114 via coolant feed tube 172.

It will be appreciated from the forgoing discussion in relation to the first embodiment of the invention that the series of services passages 170 in the array 100 will alternate between accommodating a coolant inlet conduit 166 and a coolant outlet conduit. Along with cooling and agitation hoses, probe cables may also be received within the service passage 170.

Still referring to Figure 16, the cell top jutting portions 125 which extend between the battery terminals 136 terminate short of the cell side walls 120 creating a ledge 167. When the pair of cell tops 124 are abutted against one another as shown in Figure 16, the pair of ledges forms the base of service passage 170 in which the service conduits are received.

As best shown in Figure 14, terminals 136 extend upward from a floor 139 of the cut-outs 137. The cut-out floor 139 along with the ledge 167 thereby define the lower portion 128 of cell tops 124.

Still referring to Figure 16, the crawl board 182 is shown overlying the services passage 182 such that the bus bars, terminals, cooling hoses, agitation hoses and probe cables are nearly contained and a substantially flat top surface 130 is provided upon which maintenance personnel can move across the array 100.

Figure 17 is a partial cross section of the utility recess 132 in which a utility fitting 133 (for example an agitation port, ventilation port or a cell probe) is received. The utility recess is formed in a plastic insert 143 moulded into the cell top 124. A fiberglass cell cover 145 surrounds the plastic insert 143. A moulded rubber cell cover liner 147 is located beneath the cell cover 145 and beneath the plastic insert 143.

Those skilled in the art will appreciate that the invention described herein is susceptible to variations and modifications other than those specifically described. It is understood that the invention includes all such variations and modifications which fall within the spirit and scope of the present invention.

Where the terms "comprise", "comprises", "comprised" or "comprising" are used in this specification (including the claims) they are to be interpreted as specifying the presence of the stated features, integers, steps or components, but not precluding the presence of one or more other feature, integer, step, component or group thereof.

## Claims

1. A battery bank for a submarine, the battery bank including:
• an array of battery cells in electrical connection, each battery cell having a cell top which includes an upper portion and a lower portion;
• a services passage recessed below the upper portion for accommodating at least one ancillary service conduit; and
• a plurality of removable crawl boards overlying and concealing the services passage.

2. A battery bank according to claim 1, the services passage being formed in the cell tops.

3. A battery bank according to claim 2, the lower portions arranged adjacently in the array to collectively form the services passage.

4. A battery bank according to any one of the preceding claims, the upper portions of the cell tops having a top surface and the crawl boards having upper surfaces which are approximately co-planar with the top surfaces of the cell tops.

5. A battery bank according to any one of the preceding claims, the crawl boards including a bunded configuration for containing fluid spills.

6. A battery bank according to any one of the preceding claims, including a crawl board locking mechanism for securing the crawl boards to the battery array.

7. A battery bank according to any one of the preceding claims, the array being rectangular in plan perspective and including a plurality of services passages extending along a width direction of the rectangular array, the battery bank further including a cooling system inlet manifold extending along a first longitudinal edge of the array, a cooling system outlet manifold extending along an opposing second longitudinal edge of the array and a plurality of cooling inlet and outlet conduits extending from the inlet and outlet manifolds through the plurality of services passages and the battery bank further including an agitation system manifold extending along the longitudinal edge of the array and a plurality of agitation conduits extending along at least some of the services passages.

8. A battery bank according to any one of the preceding claims, the cell tops including a plurality of terminal cut-outs, each terminal cut-out accommodating a battery terminal.

9. A battery bank according to claim 8, the crawl boards including a plurality of corner portions and the terminal cut-outs and corner portions each including corresponding curved portions.

10. A battery bank according to any one of any one of the preceding claims, including one or more utility elements and each of the utility elements being located in a respective utility recess in the cell top.

11. A battery bank according to claim 10, the cell top including a conduit passage for accommodating a services conduit extending between one of the utility recesses and the services passage.

12. A battery cell for a submarine battery bank, the battery cell including a plurality of upright side walls extending between a cell top and a cell base, the cell top including:
• an upper portion defining a top surface of the cell; and
• a lower portion for accommodating one or more service conduits in a position below the top surface of the cell.

13. A battery cell according to any one of claims 12, including a pair of lower portions disposed on opposite ends of the upper portion, each lower portion including a pair of battery terminals and the cell top being shaped to occupy a volume between each pair of battery terminals.

14. A battery cell according to any one of claims 12 or 13, each battery terminal located in a respective cut-out formed in the cell top.

15. A battery cell according to any one of claims 12 to 14, including a probe head, an agitation port and a ventilation port, each of which being accommodated in a respective utility recess and the cell top further including a conduit passage for, in use, accommodating a services conduit extending between one of the utility recesses and the lower portion of the cell top.
